# EUROPÄISCHE PATENTSCHRIFT

(11) **EP 2 091 315 B1**
(45) Veröffentlichungstag und Bekanntmachung des Hinweises auf die Patenterteilung: **11.03.2020**
(21) Anmeldenummer: 07817641.9
(22) Anmeldetag: 10.10.2007
(51) Int. Cl.: A01B 63/14

(54) **BODENBEARBEITUNGSGERÄT MIT GROSSER ARBEITSBREITE**
SOIL TREATMENT DEVICE HAVING A LARGE WORKING WIDTH
APPAREIL DE TRAVAIL DU SOL AYANT UNE LARGEUR D'ACTION IMPORTANTE

(30) Priorität: 10.10.2006 DE 102006047890
(43) Veröffentlichungstag der Anmeldung: 26.08.2009
(73) Patentinhaber: Lemken GmbH & Co. KG, 46519 Alpen (DE)
(72) Erfinder: ACHTEN, Georg, 47918 Tönisvorst (DE); TERBOVEN, Johannes, 46519 Alpen (DE)
(86) Internationale Anmeldenummer: PCT/DE2007/001799
(87) Internationale Veröffentlichungsnummer: WO 2008/043348

(56) Entgegenhaltungen:
- GB-A- 562 663
- US-A- 6 131 669

## Beschreibung

Die Erfindung betrifft ein Bodenbearbeitungsgerät mit großer Arbeitsbreite gemäß dem Oberbegriff des Patentanspruches 1. Ein Bodenbearbeitungsgerät ist aus der deutschen Offenlegungsschrift DE 43 06 599 bekannt. Bei dem Gegenstand dieser Anmeldung handelt es sich um ein gezogenes Bodenbearbeitungsgerät mit Deichsel und Zugöse als Zugeinrichtung, mit in Arbeitsstellung hinten angeordneten Arbeitsfeldern und zwischen der Zugeinrichtung und den Arbeitsfeldern angeordnetem Fahrgestell. Bei einem derartigen Gerät besteht das Problem, dass vor der Kehrfahrt auf dem Vorgewende die Arbeitsfelder über die geräteseitigen Hubeinrichtungen ausgehoben werden müssen. Da die Arbeitsfelder hinter dem Fahrgestell angeordnet sind, wird im Bereich der Zugöse eine nach oben gerichtete Kraft erzeugt, die die Hinterachse des Zugfahrzeuges bzw. Traktors entlastet. Abhängig vom Gewicht der Arbeitsfelder kann die Entlastung so groß sein, dass eine Kehrfahrt auf dem Vorgewende aufgrund mangelnder Traktion erheblich erschwert wird. US6131669A beschreibt ein klappbares Bodenbearbeitungsgerät, wobei den klappbaren Rahmenteilen jeweils nach hinten auskragende Stützräder zugeordnet sind.

Aufgabe der Erfindung ist es, ein Bodenbearbeitungsgerät mit großer Arbeitsbreite zu schaffen, das unter Beibehaltung der vorteilhaften Position des Fahrgestells vor den Arbeitsfeldern eine Entlastung der Hinterachse des Zugfahrzeuges verhindert bzw. erheblich reduziert.

Diese Aufgabe wird erfindungsgemäß durch die Merkmale des kennzeichnenden Teils des Patentanspruches 1 gelöst. Dadurch dass dem Querrahmen eine Stützvorrichtung mit mindestens einem Stützrad zugeordnet ist, das in Arbeitsstellung während der Kehrfahrt auf dem Vorgewende absenkbar und so einen Teil des Gewichtes der Arbeitsfelder tragend ausgebildet ist, wird sichergestellt, dass die Entlastung der Hinterachse des Zugfahrzeuges reduziert wird. Dies kann in dem Umfang geschehen, dass keine Entlastung der Hinterachse des Zugfahrzeuges mehr auftritt. Dabei sieht die Erfindung vor, dass die Stützvorrichtung nicht nur unmittelbar am Querrahmen, sondern auch an den Arbeitsfeldern oder an anderen geeigneten Punkten des Bodenbearbeitungsgerätes befestigt ist. Außerdem ist weiter vorgesehen, dass der Querrahmen ein Mittelteil mit Seitenteilen aufweist, wobei dem Mittelteil die Stützvorrichtung mit mindestens einem Stützrad zugeordnet ist, wobei die Seitenteile zusammen mit den äußeren Arbeitsfeldern jeweils um eine schräg gestellte Achse des Querrahmens schwenkbar sind und die schräg gestellten Achsen in Draufsicht ein in Arbeitsrichtung gesehen nach hinten geschlossenes V bildend und von der Seite gesehen in Arbeitsrichtung nach vorn geneigt angeordnet sind. Durch diese Ausbildung der schräg gestellten Achsen, um die die Arbeitsfelder verschwenkbar sind, wird bewirkt, dass die Arbeitsfelder jeweils nach vorn hoch geschwenkt und umgeschwenkt werden, und zwar jeweils nicht um zwei Achsen, sondern jeweils nur um eine Achse.

Die Erfindung sieht weiter vor, dass die Stützvorrichtung für den Straßentransport in eine hoch geschwenkte Transportstellung hochschwenkbar oder einschwenkbar ausgebildet ist. Da sich zumindest der Schwerpunkt der äußeren Arbeitsfelder in der hoch gestellten und nach vorne geschwenkten Transportstellung oberhalb bzw. vor dem Fahrgestell befindet, ist in dieser Stellung eine Stützvorrichtung unnötig; sie wird gemäß der Erfindung in eine kompakte Transportstellung geschwenkt.

Die Erfindung sieht weiter vor, dass die Stützvorrichtung in Arbeitsstellung während der Überfahrt aushebbar oder einklappbar ausgebildet ist. Je nach Arbeitssituation besteht so die Möglichkeit, während der Arbeit in Arbeitsstellung, die Stützvorrichtung bei Bedarf zu deaktivieren. Bei abgesenkten Arbeitsfeldern entsteht keine Hinterachsentlastung des Zugfahrzeuges, somit muss dann auch kein Gewicht der Arbeitsfelder von der Stützvorrichtung getragen werden.

Erfindungsgemäß ist weiter vorgesehen, dass die Stützvorrichtung für die Transportfahrt absenkbar ist und so als zusätzliches Tragrad oder als zusätzliche Tragachse dienend und eine Achslastreduzierung des Fahrgestells bewirkend ausgebildet ist. Diese Ausführung der Stützvorrichtung stellt sicher, dass bei Überschreitung der für den Straßentransport zulässigen Achslast des Fahrgestells, das entsprechende Übergewicht von der Stützvorrichtung getragen wird. Auch in Verbindung mit Ausführungen mit mittleren Arbeitsfeldern, die hinter dem Fahrgestell angeordnet sind und bei denen die hoch gestellten und nach vorne geschwenkten äußeren Arbeitsfelder vom Gewicht her nicht ausreichen, eine Entlastung der Hinterachse des Zugfahrzeuges zu verhindern, kann die Stützeinrichtung sicherstellen, dass die Hinterachse des Zugfahrzeuges nicht entlastet wird.

Die Erfindung sieht weiter vor, dass die Stützvorrichtung über einen Hydraulikzylinder und ein Lenkergetriebe in die jeweilige Betriebsstellung bringbar ausgebildet ist. Mit Hilfe eines Hydraulikzylinders und einem Lenkergetriebe kann die Stützvorrichtung einfach ausgeschwenkt und abgesenkt, aber auch einfach eingeschwenkt werden. Das Lenkergetriebe ist so ausgeführt, dass die Stützvorrichtung mit Stützrad oder mit Transportachse immer in die optimale Betriebsstellung für die Arbeit aber auch für den Transport gebracht werden kann.

Die Erfindung sieht weiter vor, dass das Stützrad der Stützvorrichtung als Nachlaufrad ausgebildet ist, das um die in Arbeitsstellung annähernd senkrecht angeordnete Schwenkachse 360° schwenken kann. Durch diese Ausführungsform wird sichergestellt, dass ohne aufwendige Lenkeinrichtungen das Laufrad der Stützvorrichtung sich der jeweiligen Fahrtrichtung des Bodenbearbeitungsgerätes anpassen kann.

Die Erfindung sieht weiter vor, dass die Stützvorrichtung mit einer vorwählbaren Stützkraft beaufschlagbar und elastisch nachgebbar ausgebildet ist. Dadurch dass die nutzbare Stützkraft vorwählbar ist, wird nur so viel Gewicht der Arbeitsfelder von der Stützvorrichtung getragen, wie erforderlich. Dadurch dass die Stützvorrichtung nachgebbar ist, können auch während der Kehrfahrt auf dem Vorgewende oder während der Transportfahrt Bodenunebenheiten ausgeglichen werden, ohne dabei die Stützfunktion zu verlieren.

Die Erfindung sieht weiter vor, dass die schräg gestellten Achsen in Draufsicht annähernd 90° zueinander und nach vorne, von der Seite und in Arbeitsrichtung gesehen mit annähernd 45° geneigt angeordnet sind. Dadurch wird gewährleistet, dass die Arbeitsfelder senkrecht hoch geschwenkt und in Transportstellung parallel zu einander eingeschwenkt sind, was bei vorgegebener Arbeitsbreite eine besonders geringe Transportbreite und zugleich eine geringe Transporthöhe gewährleistet.

Weiter wird erfindungsgemäß vorgesehen, dass die Seitenteile gegenüber dem Mittelteil des Querrahmens und dem Tragrahmen über einen Hydraulikzylinder verschwenkbar sind und dass dem Querrahmen und dem Tragrahmen ein vorzugsweise hydraulisches Schwenkgetriebe zugeordnet ist, mittels dem die Seitenteile mit den seitlichen Arbeitsfeldern um die schräg gestellten Achsen verschwenkbar sind. Diese Ausführungsform ermöglicht es, dass die Arbeitsfelder über nur einen Hydraulikzylinder hoch und nach vorne umgeschwenkt werden können. Denkbar ist auch, dass zwei oder mehrere Hydraulikzylinder parallel eingesetzt werden, um so keinen großen speziellen Hydraulikzylinder einsetzten zu müssen sondern mehrere kleinere handelsübliche Hydraulikzylinder.

Die Erfindung sieht weiter vor, dass das Schwenkgetriebe so ausgebildet ist, dass die äußeren Arbeitsfelder zwangsgeführt ein- und ausgeklappt werden. Das Schwenkgetriebe ist in bekannter weise so ausgeführt, dass die linken und rechten äußeren Arbeitsfelder gleichzeitig hoch- und eingeschwenkt werden. So wird sichergestellt, dass während der Umstellung von der Transportstellung in die Arbeitsstellung und umgekehrt, keine Überlastung des Fahrgestells auftreten kann. Eine seitliche Kippgefahr während des Schwenkvorganges ist dadurch ebenfalls ausgeschlossen.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen
- Figur 1: eine Seitenansicht des Bodenbearbeitungsgerätes in Transportstellung,
- Figur 2: eine Seitenansicht des Bodenbearbeitungsgerätes in Arbeitsstellung,
- Figur 3: eine Ansicht der Unterseite einer Hälfte des Bodenbearbeitungsgerätes und
- Figur 4: eine Vorderansicht des Bodenbearbeitungsgerätes in Transportstellung.

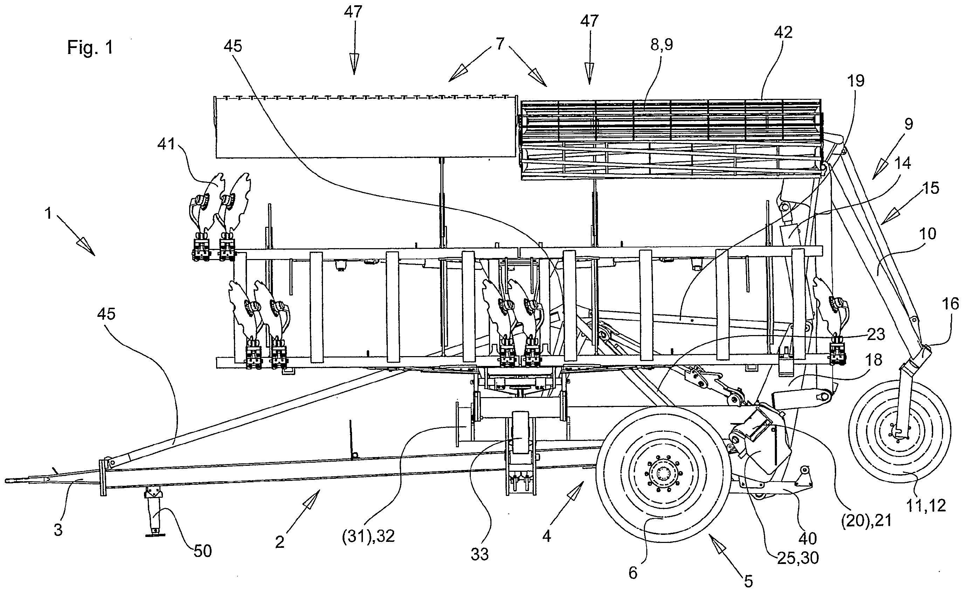

Die Figur 1 zeigt eine Seitenansicht des Bodenbearbeitungsgerätes 1 in Transportstellung. Vorne am Bodenbearbeitungsgerät 1 befindet sich die Zugeinrichtung 3 und die Abstellstütze 50, die am Tragrahmen 2 befestigt sind. Hinten am Tragrahmen 2 befindet sich der Querrahmen 25 und das Fahrgestell 5. Der Querrahmen 25 besteht aus einem Mittelteil 30 und Seitenteilen 31 und 32. Die Seitenteile 31, 32 sind über schräg angeordnete Achsen 20, 21 schwenkbar mit dem Mittelteil 30 verbunden. Die Seitenteile 31, 32 weisen hier Hubhydrauliken 33 auf, die Schnittstellen für die Befestigung der Arbeitsfelder 7, 8 und 9 aufweisen. Über diese Hubhydrauliken 33 werden die einzelnen Arbeitsfelder 7 ausgehoben. Wenn das Bodenbearbeitungsgerät 1 neben den äußeren Arbeitsfeldern 8 und 9 noch mit hinteren mittleren Arbeitsfeldern ausgerüstet ist, befinden sich auch am Mittelteil 30 die dafür erforderlichen Hubhydrauliken 33. Das Fahrgestell 5 ist hier mit einer Achse 6 ausgerüstet. Denkbar ist auch ein Fahrwerk 5 mit Tandemachse oder mit mehreren Achsen 6.

Am Mittelteil 30 des Querrahmens 25 befindet sich die Stützvorrichtung 10 mit Stützrad 11. Für die Aufnahme der Stützvorrichtung 10 ist das Mittelteil 30 mit einem Stützturm 18 ausgerüstet, an dem das Lenkergetriebe 15 und auch der Hydraulikzylinder 14 angreift. Der Stützturm 18 ist über die Strebe 19 mit dem fachwerkartigen Stützrahmen 45 verbunden. Das Stützrad 11 ist hier als Nachlaufrad 12 ausgebildet. Das Nachlaufrad 12 kann 360° um die Schwenkachse 16 schwenken. Das Lenkergetriebe 15 ist so ausgebildet, dass die Schwenkachse 16 in Arbeitsstellung senkrecht und in Transportstellung wie dargestellt schräg steht. In den Fällen, wo die Stützvorrichtung 10 auch während der Transportfahrt Gewicht der Arbeitsfelder 7, 8, 9 oder ein Teil des Gewichtes des Bodenbearbeitungsgerätes 1 tragen soll, ist das Lenkergetriebe 15 so ausgebildet, dass die Schwenkachse 16 auch während der Transportfahrt annähernd senkrecht zum Boden steht. Im hinteren Bereich 4 des Tragrahmens 2 befinden sich zusätzliche Zuglenker 40, die dazu dienen, die in Arbeitsstellung befindlichen Arbeitsfelder 7, 8 und 9 in der Arbeitstiefe zusätzlich zu führen. Die einzelnen Arbeitsfelder 7, 8 und 9 bestehen im Wesentlichen aus scheibenförmigen Werkzeugen 41 oder aus zinkenförmigen Werkzeugen. In den einzelnen Figuren sind der Einfachheit halber nur einige der scheibenförmigen Arbeitswerkzeugen 41 dargestellt. Das jeweilige Arbeitsfeld 7, 8 und 9 ist hier noch mit Walzen 42 ausgerüstet. Ein Arbeitsfeld 7, 8 oder 9 beinhaltet zwei Gerätesektionen 47. Je nach Ausführung kann ein Arbeitsfeld 7, 8 oder 9 auch aus einer Gerätesektion 47, aus zwei Gerätesektionen 47 oder aus mehr als zwei Gerätesektionen 47 bestehen.

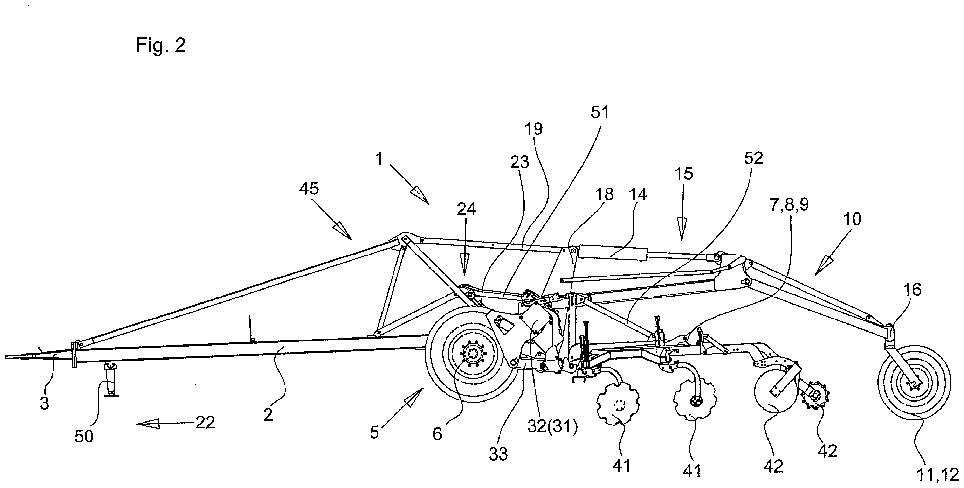

Die Figur 2 zeigt eine Seitenansicht des Bodenbearbeitungsgerätes 1 in Arbeitsstellung. Sie verdeutlicht insbesondere, dass das Fahrwerk 5 mit Achse 6 sich zwischen der Zugeinrichtung 3 und den Arbeitsfeldern 7 befindet. Die Arbeitsfelder 7 bestehen hier aus zwei Reihen von nebeneinander angeordneten scheibenförmigen Werkzeugen 41 und hinter den scheibenförmigen Werkzeugen 41 angeordneten Walzen 42. Figur 2 verdeutlicht auch, wie die Stützvorrichtung 10 mit Stützrad 11 in Arbeitsstellung positioniert ist.. Das Lenkergetriebe 15 ist kinematisch entsprechend ausgelegt. Der Hydraulikzylinder 14 der Stützeinrichtung 10 steht mit einem nicht dargestellten Hydrospeicher in Verbindung, der für eine Bodenanpassung des Stützrades 11 und damit der gesamten Stützvorrichtung 10 sorgt. Der fachwerkartige Stützrahmen 45 sorgt für die nötige Stabilität des Tragrahmens und fixiert auch den Stützturm 18 der Stützvorrichtung 10. Über die Strebe 19 steht der Stützturm 18 nebst Stützvorrichtung 10 mit dem fachwerkartigen Stützrahmen 45 in Verbindung. Über den Hydraulikzylinder 23 und die Zuglenkerpaare 51 und 52 des Schwenkgetriebes 24 werden die Seitenteile 31 und 32 mit den Arbeitsfeldern 7, 8 und 9 jeweils in die Transportstellung oder in die Arbeitsstellung geschwenkt.

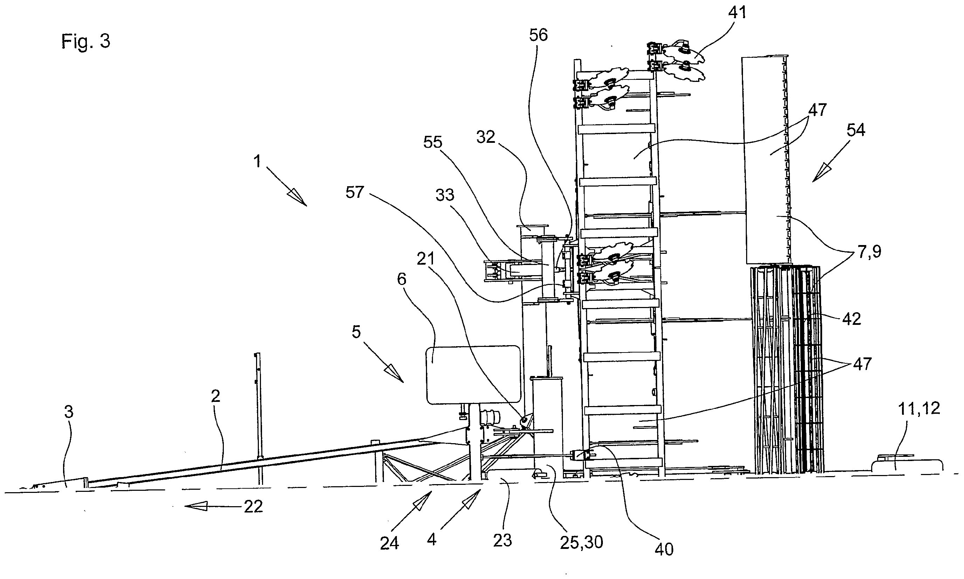

Die Figur 3 zeigt eine Ansicht der Unterseite des Bodenbearbeitungsgerätes 1 in Arbeitsstellung, allerdings nur die linke Geräteseite 54. Die rechte Geräteseite ist spiegelbildlich ausgebildet. Die einzelnen Arbeitsfelder 7, und 9 befinden sich hinter dem Fahrwerk 5 und bestehen hier aus zwei Gerätesektionen 47. Vom Fahrwerk 5 hinterlassene Spuren können so während der Arbeit z.B. von den scheibenförmigen Werkzeugen 41 oder anderen Werkzeugen der Arbeitsfelder 7 gelockert und eingeebnet werden. Das Fahrwerk 5 mit seiner Achse 6 ist direkt mit dem Tragrahmen 2 verbunden. Das Mittelteil 30 des Querrahmens 25 ist fest mit dem Tragrahmen 2 verbunden und trägt die beiden Seitenteile 31 und 32, die um die schräg angeordneten Achsen 20 und 21 zum Mittelteil 30 verschwenkbar angeordnet sind. Die Hubhydraulik 32 mit Unterlenker 55 und Oberlenker 56 trägt über den Dreipunktturm 57 das Arbeitsfeldes 7 bzw. 9.

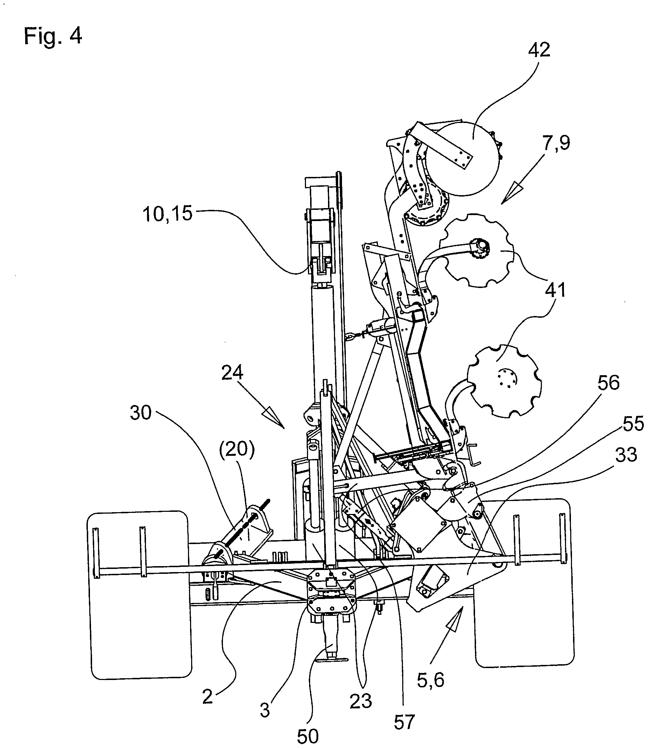

Die Figur 4 zeigt eine Vorderansicht des Bodenbearbeitungsgerätes 1 in Transportstellung. Der Einfachheit halber wurden das Arbeitsfeld 8 und das Seitenteil 31 der rechten Geräteseite weggelassen. Dadurch wird auch verdeutlicht, wie die einzelnen Achsen 20 und 21 geneigt und V-förmig zueinander angeordnet sind. Über zwei Hydraulikzylinder 23 und das Schwenkgetriebe 24 werden die Seitenteile 31, 32 mit den daran angebauten Arbeitsfeldern 7 für den Transport nach vorne und nach oben umgeschwenkt. Dies geschieht zeitgleich, weil das Schwenkgetriebe 24 zwangsgeführt ist. In diesem Beispiel sind zwei handelsübliche Hydraulikzylinder 23 und nicht ein einzelner entsprechend größerer Hydraulikzylinder eingesetzt.

## Patentansprüche

1. Bodenbearbeitungsgerät (1) mit großer Arbeitsbreite, mit einem Tragrahmen (2) und einer Zugeinrichtung (3) für die Verbindung des Bodenbearbeitungsgerätes mit einem Zugfahrzeug, wobei der Tragrahmen (2) zum einen im hinteren Bereich (4) ein Fahrgestell (5) mit Achse (6) aufweist und zum anderen über einen Querrahmen (25) mehrere Arbeitsfelder (7) trägt, die in Arbeitsstellung hinter dem Fahrgestell (5) angeordnet sind, wobei in Transportstellung zumindest die äußeren Arbeitsfelder (8, 9) hoch gestellt und nach vorne geschwenkt angeordnet sind, wobei dem Querrahmen (25) eine Stützvorrichtung (10) mit mindestens einem Stützrad (11) zugeordnet ist, das in Arbeitsstellung während der Kehrfahrt auf dem Vorgewende absenkbar und so einen Teil des Gewichtes der Arbeitsfelder (7) tragend ausgebildet ist
**dadurch gekennzeichnet, dass** der Querrahmen (25) ein Mittelteil (30) mit Seitenteilen (31, 32) aufweist, wobei dem Mittelteil (30) die Stützvorrichtung (10) mit mindestens einem Stützrad (11) zugeordnet ist, wobei die Seitenteile (31, 32) zusammen mit den äußeren Arbeitsfeldern (8, 9) jeweils um eine schräg gestellte Achse (20, 21) des Querrahmens (25) schwenkbar sind und die schräg gestellten Achsen (20, 21) in Draufsicht ein in Arbeitsrichtung (22) gesehen nach hinten geschlossenes V bildend und von der Seite gesehen in Arbeitsrichtung (22) nach vorn geneigt angeordnet sind.

2. Bodenbearbeitungsgerät nach Anspruch 1,
**dadurch gekennzeichnet,**
**dass** die Stützvorrichtung (10) für den Straßentransport in eine hoch geschwenkte Transportstellung hochschwenkbar oder einschwenkbar ausgebildet ist.

3. Bodenbearbeitungsgerät nach Anspruch 1 und 2,
**dadurch gekennzeichnet,**
**dass** die Stützvorrichtung (10) in Arbeitsstellung während der Überfahrt aushebbar oder einklappbar ausgebildet ist.

4. Bodenbearbeitungsgerät nach Anspruch 1 bis 3,
**dadurch gekennzeichnet,**
**dass** die Stützvorrichtung (10) für die Transportfahrt absenkbar ist und so als zusätzliches Tragrad oder als zusätzliche Tragachse dienend und eine Achslastreduzierung des Fahrgestells (5) bewirkend ausgebildet ist.

5. Bodenbearbeitungsgerät nach Anspruch 1 und 2,
**dadurch gekennzeichnet,**
**dass** die Stützvorrichtung (10) über einen Hydraulikzylinder (14) und ein Lenkergetriebe (15) in die jeweilige Betriebsstellung bringbar ausgebildet ist.

6. Bodenbearbeitungsgerät nach Anspruch 1 und 2,
**dadurch gekennzeichnet,**
**dass** das Stützrad (11) der Stützvorrichtung (10) als Nachlaufrad (12) ausgebildet ist, das um die in Arbeitsstellung annähernd senkrecht angeordnete Schwenkachse (16) 360° schwenken kann.

7. Bodenbearbeitungsgerät nach Anspruch 1 und 2,
**dadurch gekennzeichnet,**
**dass** die Stützvorrichtung (10) mit einer vorwählbaren Stützkraft beaufschlagbar und elastisch nachgebbar ausgebildet ist.

8. Bodenbearbeitungsgerät nach Anspruch 1 bis 5,
**dadurch gekennzeichnet,**
**dass** die schräg gestellten Achsen (20, 21) in Draufsicht annähernd 90° zueinander und nach vorne, von der Seite und in Arbeitsrichtung (22) gesehen mit annähernd 45° geneigt angeordnet sind.

9. Bodenbearbeitungsgerät nach Anspruch 1 bis 6,
**dadurch gekennzeichnet,**
**dass** die Seitenteile (31, 32) gegenüber dem Mittelteil (30) des Querrahmens (25) und dem Tragrahmen (2) über einen Hydraulikzylinder (23) verschwenkbar sind und dass dem Querrahmen (25) und dem Tragrahmen (2) ein vorzugsweise hydraulisches Schwenkgetriebe (24) zugeordnet ist, mittels dem die Seitenteile (31, 32) mit den seitlichen Arbeitsfeldern (8, 9) um die schräg gestellten Achsen (20, 21) verschwenkbar sind.

10. Bodenbearbeitungsgerät nach Anspruch 9,
**dadurch gekennzeichnet,**
**dass** das Schwenkgetriebe (24) so ausgebildet ist, dass die äußeren Arbeitsfelder (8, 9) zwangsgeführt ein- und ausgeklappt werden.

## Claims

1. Soil cultivation implement (1) having a large working width, having a supporting frame (2) and a pulling device (3) for connecting the soil working implement to a towing vehicle, the supporting frame (2) having, on the one hand, a chassis (5) with an axle (6) in the rear region (4) and, on the other hand, carrying, via a transverse frame (25), a plurality of working fields (7) which, in the working position, are arranged behind the chassis (5), at least the outer working fields (8, 9) being raised in the transport position and being arranged swivelled forwards, the transverse frame (25) being assigned a supporting device (10) having at least one supporting wheel (11) which, in the working position, can be lowered on the headland during the sweeping travel and is thus designed to support part of the weight of the working fields (7).
**characterized in that**
the transverse frame (25) has a central part (30) with side parts (31, 32), the central part (30) being assigned the supporting device (10) with at least one supporting wheel (11), the side parts (31, 32) together with the external working fields (8, 9) are each pivotable about an inclined axis (20, 21) of the transverse frame (25) and the inclined axes (20, 21) are arranged in plan view to form a V which is closed to the rear when viewed in the working direction (22) and are inclined to the front when viewed from the side in the working direction (22).

2. Soil cultivation implement according to claim 1,
**characterized in that**
the supporting device (10) is designed for road transport such that it can be swivelled up or swivelled in into a raised transport position.

3. Soil cultivation implement according to claims 1 and 2,
**characterized in that**
the supporting device (10) is designed such that it can be raised or folded in during the passage in the working position.

4. Soil cultivation implement according to claim 1 to 3,
**characterized in that**
the supporting device (10) can be lowered for the transport passage and is thus designed to serve as an additional carrying wheel or as an additional carrying axle and to effect an axle load reduction of the chassis (5).

5. Soil cultivation implement according to claims 1 and 2,
**characterized in that**
the supporting device (10) can be brought into the respective operating position via a hydraulic cylinder (14) and a guiding linkage (15).

6. Soil cultivation implement according to claims 1 and 2,
**characterized in that**
the support wheel (11) of the support device (10) is designed as a trailing wheel (12) which can pivot 360° about the pivot axis (16) arranged approximately vertically in the working position.

7. Soil cultivation implement according to claims 1 and 2,
**characterized in that**
the supporting device (10) can be acted upon by a pre-selectable supporting force and is designed to be elastically movable.

8. Soil cultivation implement according to claim 1 to 5,
**characterized in that**
the inclined axes (20, 21) are arranged at an angle of approximately 90° to one another and to the front, viewed from the side and in the working direction (22), of approximately 45° in plan view.

9. Soil cultivation implement according to claim 1 to 6,
**characterized in that**
the side parts (31, 32) can be pivoted relative to the central part (30) of the transverse frame (25) and the supporting frame (2) via a hydraulic cylinder (23), and **in that** the transverse frame (25) and the supporting frame (2) are assigned a preferably hydraulic pivoting transmission (24) by means of which the side parts (31, 32) can be pivoted with the lateral working fields (8, 9) about the inclined axes (20, 21).

10. Soil cultivation implement according to claim 9,
**characterized in that**
the pivoting transmission (24) is designed in such a way that the outer working fields (8, 9) are forcibly guided in and out.

## Revendications

1. Appareil de travail du sol (1) à grande largeur de travail, comprenant un châssis de support (2) et un timon de traction (3) pour relier l'appareil de travail du sol à un véhicule tracteur, le châssis de support (2) comportant, d'une part, un châssis (5) avec un axe (6) dans la zone arrière (4) et, d'autre part, portant, via un cadre transversal (25), plusieurs segments de travail (7) qui sont disposés derrière le châssis (5), en position de travail, au moins les segments de travail extérieurs (8, 9) étant relevés en position de transport et disposés pivotants vers l'avant, le cadre transversal (25) étant associé à un dispositif de support (10) comportant au moins une roue de support (11) qui, en position de travail, peut être abaissée sur le tourillon pendant la course de balayage et est ainsi conçue pour supporter une partie du poids des segments de travail (7).
**caractérisé en ce que**
le cadre transversal (25) comportant une partie centrale (30) avec des parties latérales (31, 32), la partie centrale (30) étant affectée au dispositif de support (10) avec au moins une roue de support (11), les parties latérales (31, 32) avec les segments de travail extérieurs (8, 9) peuvent pivoter autour d'un axe incliné (20, 21) du cadre transversal (25) et les axes inclinés (20, 21) sont disposés en vue de dessus pour former un V qui est fermé vers l'arrière dans la direction de travail (22) et incliné vers l'avant dans la direction de travail (22) vu de côté.

2. Appareil de travail du sol selon la revendication 1,
**caractérisé en ce que**
le dispositif de support (10) pour le transport sur route est conçu de manière à pouvoir pivoter vers le haut ou vers l'intérieur dans une position de transport relevée.

3. Appareil de travail du sol selon les revendications 1 et 2,
**caractérisé en ce que**
le dispositif de support (10) est conçu de manière à pouvoir être relevé ou replié pendant le passage en position de travail.

4. Appareil de travail du sol selon les revendications 1 à 3,
**caractérisé en ce que**
le dispositif de support (10) peut être abaissé pour le transport et est donc conçu pour servir de roue porteuse supplémentaire ou d'essieu porteur supplémentaire et pour réduire la charge par essieu du châssis (5).

5. Appareil de travail du sol selon les revendications 1 et 2,
**caractérisé en ce que**
le dispositif de support (10) peut être amené dans la position de travail respective par l'intermédiaire d'un vérin hydraulique (14) et d'un mécanisme de direction (15).

6. Appareil de travail du sol selon les revendications 1 et 2,
**caractérisé en ce que**
la roue de support (11) du dispositif de support (10) est réalisée sous la forme d'une roue arrière (12) qui peut pivoter sur 360° autour de l'axe de pivotement (16) disposé approximativement verticalement en position de travail.

7. Appareil de travail du sol selon les revendications 1 et 2,
**caractérisé en ce que**
le dispositif de support (10) peut être sollicité par une force de support présélectionnable et est conçu pour être réglable élastiquement.

8. Appareil de travail du sol selon les revendications 1 à 5,
**caractérisé en ce que**
les axes inclinés (20, 21) sont disposés selon un angle d'environ 90° l'un par rapport à l'autre et vers l'avant, vu de côté et dans la direction de travail (22), d'environ 45° en vue plane.

9. Appareil de travail du sol selon les revendications 1 à 6,
**caractérisé en ce que**
les parties latérales (31, 32) peuvent pivoter par rapport à la partie centrale (30) du cadre transversal (25) et au cadre porteur (2) par l'intermédiaire d'un vérin hydraulique (23), et **en ce que** le cadre transversal (25) et le cadre porteur (2) reçoivent une transmission pivotante (24) de préférence hydraulique par laquelle les parties latérales (31, 32) peuvent être pivotées avec les segments de travail latéraux (8, 9) de travail autour des axes inclinés (20, 21).

10. Appareil de travail du sol selon la revendication 9,
**caractérisé en ce que**
le réducteur à fraction de tour (24) est conçu de telle sorte que les segments de travail latéraux (8, 9) sont guidés positivement vers l'intérieur et l'extérieur.
